# EUROPÄISCHE PATENTSCHRIFT

(11) **EP 3 440 491 B1**
(45) Veröffentlichungstag und Bekanntmachung des Hinweises auf die Patenterteilung: **04.06.2025**
(21) Anmeldenummer: 17716855.6
(22) Anmeldetag: 07.04.2017
(51) Int. Cl.: G02B 21/00, G02B 21/36, G02B 21/06

(54) **MIKROSKOP UND VERFAHREN ZUR ABBILDUNG EINER PROBE**
MICROSCOPE AND METHOD FOR IMAGING A SAMPLE
MICROSCOPE ET PROCÉDÉ DE REPRODUCTION D'UN ÉCHANTILLON

(30) Priorität: 08.04.2016 LU 93021
(43) Veröffentlichungstag der Anmeldung: 13.02.2019
(73) Patentinhaber: Leica Microsystems CMS GmbH, 35578 Wetzlar (DE)
(72) Erfinder: KNEBEL, Werner, 76709 Kronau (DE); FAHRBACH, Florian, 69115 Heidelberg (DE)
(74) Vertreter: Schaumburg und Partner Patentanwälte mbB
(86) Internationale Anmeldenummer: PCT/EP2017/058427
(87) Internationale Veröffentlichungsnummer: WO 2017/174795

(56) Entgegenhaltungen:
- EP-A1- 2 803 977
- EP-B1- 2 803 977
- WO-A1-2015/184124
- WO-A1-2015/189240
- WO-A1-2016/189012
- WO-A1-2016/189012
- WO-A2-2015/109323
- WO-A2-2015/109323
- US-A1- 2015 177 506
- KAVYA MOHAN ET AL: "Three Dimensional Fluorescence Imaging Using Multiple Light-Sheet Microscopy", PLOS ONE, vol. 9, no. 6, 9 June 2014 (2014-06-09), pages e96551, XP055277114, DOI: 10.1371/journal.pone.0096551
- PAUL A. DALGARNO ET AL: "Multiplane imaging and three dimensional nanoscale particle tracking in biological microscopy", OPTICS EXPRESS, vol. 18, no. 2, 18 January 2010 (2010-01-18), pages 877, XP055123803, ISSN: 1094-4087, DOI: 10.1364/OE.18.000877

## Beschreibung

Die Erfindung betrifft ein Mikroskop zum Abbilden einer Probe, umfassend eine Beleuchtungseinheit zum Aussenden von Beleuchtungslicht auf die Probe, einen Detektor zum Erfassen von Detektionslicht, das aus der Probe stammt, eine Optik zum Fokussieren des von der Beleuchtungseinheit ausgesendeten Beleuchtungslichtes in die Probe und zum Fokussieren des aus der Probe stammenden Detektionslichtes auf den Detektor und eine Scaneinheit zum Scannen der Probe mit dem Beleuchtungslicht. Ferner betrifft die Erfindung ein Verfahren zur mikroskopischen Abbildung einer Probe.

Insbesondere in der Fluoreszenzmikroskopie kommen in jüngerer Zeit Mikroskopierverfahren zur Anwendung, bei denen die Probe mit einer flächig oder linienförmig ausgedehnten Lichtverteilung beleuchtet werden. Beispiele hierfür sind unter den Bezeichnungen SPIM (Single Plane Illumination Microscopy), OPM (Oblique Plane Microscopy) und SCAPE (Swept Confocally-Aligned Planar Excitation) bekannte Mikroskopierverfahren. So wird etwa bei einem SPIM-Mikroskop ein Beleuchtungslichtbündel z.B. mit Hilfe einer Zylinderlinse nur in einer Richtung fokussiert und somit aufgeweitet, wodurch die Probe mit einem Lichtblatt oder einer Lichtscheibe beleuchtet wird, die innerhalb der Probe nur eine Probenebene ausleuchtet. Ein SPIM-Mikroskop weist für die Beleuchtung und die Detektion probenseitig zwei separate Objektive auf, deren optische Achsen senkrecht zueinander verlaufen. Die abzubildende Probenebene liegt senkrecht zur optischen Achse des Detektionsobjektivs. Die Beleuchtung dieser Probenebene erfolgt durch das Lichtblatt, welches das Beleuchtungsobjektiv senkrecht zur optischen Achse des Detektionsobjektivs in die Probe einstrahlt.

Demgegenüber wird bei dem SCAPE-Verfahren ein einziges probenseitiges Objektiv sowohl zur Beleuchtung als auch zur Detektion verwendet. Die Beleuchtung erfolgt mit einem schräg zur optischen Achse des Objektivs liegenden Lichtblatt, Infolge dieser Schrägstellung des Lichtblatts weist ein SCAPE-Mikroskop üblicherweise eine mit dem Objektiv zusammenwirkende Aufrichtungsoptik mit schräg zueinander gestellten Teiloptiken auf, die über eine Zwischenabbildung dafür sorgen, dass der mit dem schräggestellten Lichtblatt beleuchtete Probenbereich lagerichtig auf den Detektor abgebildet wird.

Zur näheren Erläuterung der vorstehend genannten SPIM-, OPM- und SCAPE-Verfahren wird beispielhaft verwiesen auf die Veröffentlichungen Kumar, S. et al., High-speed 2D and 3D fluorescence microscopy of cardiac myocytes. Opt. Express 19, 13839 (2011); Dunsby, C., Optically sectioned imaging by oblique plane microscopy, Opt. Express 16, 20306-20316 (2008) und Bouchard, M.B. et al., Swept confocally-aligned planar excitation (SCAPE) microscopy for high speed volumetric imaging of behaving organisms, Nat. Photonics 9, 113-119 (2015) sowie auf die Patentdokumente US 8582203 B2 und US 8619237 B2.

Ein verwandtes Mikroskopierverfahren, das jedoch ohne Aufrichtungsoptik auskommt, ist das sogenannte HILO-Verfahren (Higly Inclined And Laminated Optical Sheet). Hierzu wird verwiesen auf Tokunaga, M., Imamoto, N. & Sakata-Sogawa, K., Highly inclined thin illumination enables clear single-molecule imaging in cells., Nat. Methods 5, 159-161 (2008).

In der DE 10 2011 000 835 B4 wird das für eine Schrägbeleuchtung der Probe vorgesehene Lichtblatt mit Hilfe einer Scaneinheit erzeugt, die sich in einer zur rückwärtigen Fokusebene des Beleuchtungsobjektivs konjugierten Ebene befindet. Das zu detektierende Fluoreszenzlicht wird zwischen dem Objektiv und der Scaneinheit ausgekoppelt.

Zum Stand der Technik wird schließlich auf die WO 2015/109323 A2 verwiesen, die u.a. einen Mikroskopaufbau zeigt, bei dem ein dichroitischer Spiegel zur Trennung des zu detektierenden Fluoreszenzlichts einem Scanspiegel in Lichtrichtung nachgeordnet ist, so dass das Fluoreszenzlicht von dem Scanspiegel direkt entscannt wird. Dieser Aufbau entspricht weitgehend dem Aufbau eines punktscannenden Konfokalmikroskops. Er unterscheidet sich von diesem jedoch zum einen dadurch, dass der Beleuchtungsstrahl schwach fokussiert und schräg in die Probe gerichtet ist. Zum anderen wird das aus dem schrägen, gegen die Fokusebene des Objektivs verlaufenden Linienfokus aufgesammelte Fluoreszenzlicht mit einer Aufrichtungsoptik aufgerichtet. Dadurch kann Bildinformation entlang der beleuchteten Linie mit Hilfe eines Zeilensensors gewonnen werden. Da der Scanspiegel sowohl zum Scannen der Probe mit dem Beleuchtungsstrahl als auch zum Entscannen des detektierten Fluoreszenzlichtes verwendet wird, kann ein ortsfester Detektor eingesetzt werden.

Die vorstehend erläuterten, aus dem Stand der Technik bekannten Verfahren sehen jeweils nur die Detektion einer einzelnen Probenebene zu einem gegebenen Zeitpunkt vor. Dadurch ist es vergleichsweise aufwändig, ein ausgedehntes Probenvolumen abzubilden. Durch die Konzentration des Beleuchtungslichtes auf eine einzelne Probenebene kann es zudem in einigen dieser Verfahren zu einer unerwünschten Sättigung von Fluorophoren kommen.

Aus der Druckschrift WO 2015/184124 A1 ist ein Lichtblattmikroskop bekannt, das zwei einander diametral gegenüberstehende Beleuchtungsobjektive aufweist, welche die Probe in zwei gegeneinander versetzten Probenebenen beleuchten. Auf entgegengesetzten Seiten der Probe befinden sich zwei Detektoreinheiten, die jeweils aus einem Detektionsobjektiv, einer Tubuslinse und einem daran anschließenden Detektor gebildet sind. Von den beiden beleuchteten Probenebenen wird die eine auf den einen Detektor und die andere auf den anderen Detektor abgebildet.

Die Druckschrift 2015/177506 A1 beschreibt ein Lichtblattmikroskop, das ausgebildet ist, eine Probe mit mehreren parallel zueinander versetzten Lichtblättern zu beleuchten. Hierzu verfügt das Lichtblattmikroskop entweder über ein Zylinderlinsen-Array, einen Phasenmodulator, ein Prisma, einen Lichtleiter sowie daran anschließende Kollimatorlinsen oder mehrere separate Lichtquellen.

Die Druckschrift KAVYA MOHAN ET AL: "Three Dimensional Fluorescence Imaging Using Multiple Light-Sheet Microscopy", PLOS ONE, Bd 9, Nr. 6,9. Juni 2014 (2014-06-09), Seite e96551, XP055277114, DOI: 10.1371/Journal.pone.0096551 offenbart ein Lichtblattmikroskop, das mehrere parallel zueinander versetzte Lichtblätter in eine Probe fokussiert. Die mit den Lichtblättern beleuchteten Probenebenen werden über eine senkrecht zur Beleuchtungsstrahlengang angeordnete Detektionsoptik auf eine CCD-Kamera abgebildet. Zur Abbildung der verschiedenen Probenebenen wird die Probe oder die Detektionsoptik längs der Detektionsachse bewegt.

Die Druckschrift PAUL A. DALGARNO ET AL: "Multiplane imaging and three dimensional nanoscale particle tracking in biological microscopy", OPTICS EXPRESS, Bd. 18, Nr. 2, 18. Januar 2010 /(2010-01-18), Seite 877, XP055123803, ISSN: 1094-4087, DOI: 10.1364/OE.18.000877 offenbart eine Detektionsanordnung mit einem quadratisch verzerrten Gitter, das es ermöglicht, parallel gegeneinander versetzte Schärfenebenen simultan auf einer einzigen Detektionsfläche einer Kamera zu erfassen.

Aus der nachveröffentlichten Offenlegungsschrift WO 2016/189012 A1 ist ein Mikroskop nach dem Oberbegriff des Anspruchs 1 bekannt. Zum Stand der Technik wird ferner auf die Druckschrift WO 2015/109323 A2 verwiesen. Daraus ist ein System bekannt, bei dem der Beleuchtungslichtstrahl und der Detektionslichtstrahl für eine lichtblattmikroskopische Abbildung durch das gleiche Objektiv geführt werden.

Aufgabe der Erfindung ist es, ein Mikroskop und ein Verfahren zum Abbilden einer Probe anzugeben, die eine effiziente und schonende Volumenbildgebung ermöglichen.

Die Erfindung löst diese Aufgabe durch die Gegenstände der unabhängigen Ansprüche. Vorteilhafte Weiterbildungen sind in den abhängigen Ansprüchen angegeben.

Die Erfindung ermöglicht es, mehrere räumlich voneinander getrennte Probenbereiche simultan zu beleuchten und räumlich getrennt voneinander zu erfassen. Hierzu weist der Detektor gleichsam separate Detektionskanäle auf, die den räumlich voneinander getrennten Probenbereichen zugeordnet sind. Die Separierung der Beleuchtungslichtbündel innerhalb der Probe ist so gewählt, dass ein Übersprechen des Detektionslichtes aus dem ihm zugeordneten Detektionskanal auf einen anderen Detektionskanal sicher vermieden wird. Ein solches Übersprechen würde in den einzelnen Bildern zu einer Erhöhung des störenden Signalhintergrundes und damit zu einer Verringerung des Bildkontrastes führen. Geht man davon aus, dass die erfindungsgemäße Optik, die das aus der Probe stammende Detektionslicht auf den Detektor fokussiert, für jeden beleuchteten Probenbereich ein Detektionsvolumen in Form einer Punktspreizfunktion, kurz PSF, definiert, so lässt sich die gewünschte Bündelseparierung innerhalb der Probe unter Berücksichtigung dieser PSF geeignet festlegen.

Das erfindungsgemäße Mikroskop kann sowohl nach Art eines herkömmlichen SPIM-Mikroskops als auch nach Art eines herkömmlichen SCAPE- oder OPM-Mikroskops betrieben werden, mit dem Unterschied, dass zu einem gegebenen Zeitpunkt nicht nur ein einziger zusammenhängender Probenbereich, sondern mehrere räumlich voneinander getrennte Probenbereiche beleuchtet werden. Insbesondere können die Beleuchtungslichtbündel auch zum Aufbau mehrerer Lichtblätter genutzt werden, welche die Probe in verschiedenen Probenebenen simultan beleuchten. So ist beispielsweise denkbar, das Lichtblatt innerhalb einer betrachteten Probenebene mittels der Scaneinheit sequentiell aufzubauen. In der betrachteten Probenebene "sieht" der Detektor demnach das bewegte Beleuchtungslichtbündel in Form einer zusammenhängenden Lichtverteilung, die das Lichtblatt bildet. Eine räumlich separierte Erfassung des Detektionslichtes erfolgt in diesem Fall nur in Bezug auf die verschiedenen Probenebenen, nicht jedoch innerhalb einer betrachteten Probenebene.

Die erfindungsgemäße Verteilung des Beleuchtungslichts kann in vorteilhafter Weise zur schonenden Probenbeleuchtung genutzt werden, um insbesondere eine unerwünschte Sättigung der Fluorophore vermeiden.

Vorzugsweise wirken die Beleuchtungseinheit, die Scaneinheit und die Optik derart zusammen, dass die Beleuchtungslichtbündel in der Probe einen gegenseitigen Parallelversatz aufweisen.

Dieser Parallelversatz kann einen ersten Parallelversatz längs einer ersten Achse, die senkrecht zur optischen Achse eines in der Optik enthaltenen Detektionsobjektivs liegt, und/oder einen zweiten Parallelversatz längs einer zweiten Achse beinhalten, die senkrecht zur optischen Achse des Detektionsobjektivs liegt, wobei die erste und die zweite Achse senkrecht zueinander ausgerichtet sind. Die in der Probe parallel zueinander versetzten Beleuchtungslichtbündel erlauben es, den Detektor in vergleichsweise einfacher Weise derart auszubilden, dass eine gewünschte, räumlich voneinander getrennte Erfassung der Detektionslichtbündel möglich ist.

In einer vorteilhaften Ausführungsform ist die Scaneinheit ausgebildet, die Probe mit den Beleuchtungslichtbündeln längs einer ersten Achse zu scannen, die senkrecht zur optischen Achse eines in der Optik enthaltenen Detektionsobjektivs liegt, und/oder längs einer zweiten Achse zu scannen, die senkrecht zur optischen Achse des Detektionsobjektivs liegt, wobei die erste Achse und die zweite Achse senkrecht zueinander ausgerichtet sind. In dieser Ausführungsform ist es beispielsweise möglich, mit Hilfe der Scanbewegung längs der ersten Achse innerhalb vorgegebener Probenebene in oben beschriebener Weise jeweils ein Lichtblatt aufzubauen, während durch die Scanbewegung längs der zweiten Achse die so aufgebauten Lichtblätter sukzessive innerhalb der Probe verschoben werden. Dies ermöglicht eine besonders effiziente Volumenbildgebung.

In einer bevorzugten Ausführung umfasst die Scaneinheit einen Scanspiegel, wobei der Scanspiegel um die zweite Achse verkippbar ist, um die Probe mit dem Beleuchtungslichtbündeln längs der ersten Achse zu scannen, und/oder der Spanspiegel um eine erste Achse verkippbar ist, um die Probe mit den Beleuchtungslichtbündeln längs der zweiten Achse zu scannen. Als Scanspiegel kann beispielsweise ein Galvanometerspiegel (beispielsweise mit kardanischer Aufhängung) oder ein mikroelektromechanischer Spiegel (MEMS) als 1D- oder 2D-Scanner verwendet werden. Auch lässt sich anstatt eines einzelnen Scanspiegel alternativ auch eine Kombination von zwei oder mehr Spiegeln einsetzen. Die Erfindung ist jedoch nicht auf eine solche Art von Scaneinheit beschränkt. So ist etwa auch die Verwendung eines akustooptischen Deflektors (AOD) denkbar. Umsetzbar sind natürlich auch Kombinationen der genannten Techniken.

Die Optik enthält ein einziges Objektiv, das ein Beleuchtungsobjektiv zum Fokussieren der von der Beleuchtungseinheit ausgesendeten Beleuchtungslichtbündel in die Probe und zugleich ein Detektionsobjektiv zum Fokussieren des aus der Probe stammenden Detektionslichtbündel auf den Detektor bildet. Damit kann das erfindungsgemäße Mikroskop nach Art eines SCAPE- oder OPM-Mikroskops betrieben werden.

Vorzugsweise ist die Scaneinheit zusätzlich ausgebildet, die auf den Detektor fokussierten Detektionslichtbündel zu entscannen. Mit "entscannen" ist hierbei gemeint, dass das aus der Probe stammende Detektionslicht durch das einzige probenseitige Objektiv zurück auf die schon auf das Beleuchtungslicht einwirkende Scaneinheit zurückgeführt wird, bevor es auf den Detektor fällt. Durch diese Rückführung des Detektionslichtes auf die Scaneinheit wird die durch die Scaneinheit dem Beleuchtungslicht vermittelte Scanbewegung in Bezug auf das Detektionslicht im Sinne einer Gegenwirkung aufgehoben, was in besonders vorteilhafter Weise zur Folge hat, dass zur Erfassung des Detektionslichtes ein ortsfester Detektor verwendet werden kann.

Vorzugsweise wirken die Beleuchtungseinheit und die Scaneinheit derart zusammen, dass die Beleuchtungslichtbündel um die zweite Achse verkippt zueinander in eine Eintrittspupille des Objektivs fallen, um in der Probe den ersten Parallelversatz längs der ersten Achse zu bewirken, und/oder die Beleuchtungseinheit und die Scaneinheit derart zusammenwirken, dass die Beleuchtungslichtbündel um die zweite Achse verkippt zueinander in die Eintrittspupille des Objektivs fallen, um in der Probe den zweiten Parallelversatz längs der zweiten Achse zu bewirken. Die Verkippung der Beleuchtungslichtbündel in der Objektivpupille führen demnach zu einer Verschiebung der aus dem Objektiv austretenden Beleuchtungslichtbündel quer zur optischen Achse des Objektivs.

In einer bevorzugten Ausführung wirken die Beleuchtungseinheit und die Scaneinheit derart zusammen, dass die Beleuchtungslichtbündel jeweils nur einen außermittigen Teilbereich einer Eintrittspupille des Objektivs ausleuchten. Diese außermittige Ausleuchtung der Objektivpupille führt zu einer Schrägstellung des aus dem Objektiv austretenden Beleuchtungslichtbündels relativ zur optischen Achse des Objektivs.

Vorzugsweise ist eine der Scaneinheit in Ausbreitungsrichtung des Detektionslichtes nachgeordnete Aufrichtungsoptik mit einer ersten Teiloptik zum Erzeugen eines Zwischenbildes und einer gegenüber der ersten Teiloptik schräggestellten zweiten Teiloptik zur lagerichtigen Abbildung des Zwischenbildes auf den Detektor vorgesehen. Die Aufrichtungsoptik sorgt demnach für eine Aufrichtung des unter der Schrägbeleuchtung durch das Objektiv abgebildeten Probenbereichs.

In einer besonders bevorzugten Ausgestaltung liegen die von den Beleuchtungslichtbündeln beleuchteten Probenbereiche in mehreren, vorzugsweise parallel zueinander versetzten Probenebenen. Indem aus den verschiedenen Probenebenen simultan Bilddaten gewonnen werden, wird die Volumenbildgebung besonders effizient.

Der Detektor umfasst mehrere Teildetektoren, die jeweils einer der Probenebenen zugeordnet sind, wobei der jeweilige Teildetektor dasjenige Detektionslichtbündel erfasst, das aus der diesem Teildetektor zugeordneten

Probenebene stammt. Die Teildetektoren bilden separate Detektionskanäle, welche die räumlich getrennte Erfassung der Detektionslichtbündel ermöglichen.

Die Teildetektoren sind in einem Schärfentiefenbereich einer dem Detektor vorgeordneten Detektionsoptik angeordnet. In der SCAPE-Anwendung ist die Detektionsoptik z.B. durch die Aufrichtungsoptik gebildet. In dieser Ausführungsform ist es möglich, den Detektor in Form eines einstückigen Flächendetektors auszubilden, der mehrere linien- oder streifenförmige Detektorbereiche aufweist, welche die Teildetektoren bilden.

In einer alternativen Ausführungsform ist mindestens ein dem Detektor vorgeordnetes Element zur Beeinflussung der optischen Weglänge vorgesehen, das den Versatz der Probenebenen kompensiert.

Das genannte Element ist beispielsweise ein Glasblock, das den Versatz der Beleuchtungslichtbündel längs der optischen Achse des Detektionsobjektivs kompensiert, um ein scharfes Bild der jeweils beleuchteten Probenebene zu ermöglichen. Auch in dieser Ausführungsform ist die Verwendung eines einstückigen Flächendetektors möglich.

In einer weiteren bevorzugten Ausgestaltung umfasst der Detektor mehrere Zeilendetektoren, welche die Teildetektoren bilden. Diese Ausgestaltung ermöglicht es, die Zeilendetektoren längs der optischen Achse des Detektionsobjektiv so anzuordnen, dass dem axialen Versatz der Beleuchtungslichtbündel innerhalb der Probe Rechnung getragen ist.

Es ist auch möglich, für jedes einzelne Beleuchtungslichtbündel eine passende Optik vorzusehen, die für eine scharfe Abbildung auf den zugeordneten Zeilendetektor sorgt. An dieser Stelle ist darauf hinzuweisen, dass der axiale Versatz der Beleuchtungslichtbündel innerhalb der Probe typischerweise in einem Bereich von nur einigen Mikrometern liegt und damit so klein ist, dass eine Korrektion von Abbildungsfehlern, insbesondere von sphärischen Aberrationen, in der Regel nicht notwendig sein wird.

In einer alternativen, nicht-anspruchsgemäßen Ausführungsform können die von den Beleuchtungslichtbündeln beleuchteten Probenbereiche auch nur in einer einzigen Probenebene liegen. In diesem Fall wird die Probe nur in einer Probenebene mit den Beleuchtungslichtbündeln gescannt. Somit ist es möglich, in sehr schneller Folge Bilder dieser einzigen Probenebene zu generieren. Die Zeit zwischen den einzelnen Aufnahmen dieser Probenebene kann deutlich kleiner sein als die Zeit, die eine einzelne Kamera benötigen würde, um das gesamte Bildfeld mehrmals hintereinander abzubilden. Die Zeit zwischen den einzelnen Aufnahmen ist sogar sehr viel geringer als die Zeit, die für die Belichtung einer einzelnen Probenebene benötigt wird. In dieser Ausführung können beispielsweise Bildfolgen aufgenommen werden, die äußerst schnell ablaufende Prozesse abbilden sollen. So sind beispielsweise aus der PIV-Mikroskopie (Particle Image Velocimetry) technisch sehr aufwändige Doppelpuls-Systeme bekannt, in denen ein teurer Laser verwendet wird, der zwei äußerst starke Lichtimpulse in kurzer Abfolge aussendet. Eine Kamera nimmt entsprechend zwei Bilder auf. Das aus Kamera und Laser gebildete System benötigt jedoch nach jedem dieser Doppelimpulse eine lange Pause, bevor ein weiteres Bildpaar aufgenommen werden kann. Diese Technik ist sehr wertvoll für die Analyse von Strömungsprofilen, die sich allerdings in einem Strömungsgleichgewicht befinden müssen, da das gesamte Strömungsprofil nur aus einer Vielzahl von Bildpaaren errechnet werden kann. In der vorstehend genannten Ausführungsform kann das erfindungsgemäße Mikroskop z.B. für eine entsprechende Beobachtung extrem schneller Prozesse in der biomedizinischen Forschung eingesetzt werden.

Die Beleuchtungseinheit kann eine einzige Lichtquelle aufweisen, welche die separaten Beleuchtungslichtbündel aussendet. Es ist jedoch ebenso möglich, für jedes Beleuchtungslichtbündel eine eigene Lichtquelle vorzusehen, wodurch sich eine Kohärenz zwischen den einzelnen Beleuchtungslichtbündeln vermeiden lässt.

Vorzugsweise ist die Beleuchtungseinheit ausgebildet, die Beleuchtungslichtbündel mit unterschiedlichen Wellenlängen auszusenden. Diese unterschiedlichen Wellenlängen können entsprechend separiert aus einer einzigen breitbandigen Lichtquelle oder aber aus verschiedenen Lichtquellen stammen. In dieser Ausführung ist es beispielsweise denkbar, die Wellenlängen der Beleuchtungslichtbündel so stark gegeneinander zu verschieben, dass die Beleuchtungslichtbündel verschiedene Fluorophore anregen, deren Fluoreszenzlicht mit einfachen Filtern spektral getrennt werden kann. In diesem Fall müssen die Beleuchtungslichtbündel nicht notwendigerweise entlang der Scanrichtung (in der Probenebene senkrecht zur Ausbreitungsrichtung der Beleuchtungsstrahlbündel) versetzt sein oder in verschiedenen Probenebenen verlaufen.

In einer vorteilhaften Ausführung umfasst der Detektor eine TDI-Zeilenkamera (Time Delay Integration). Eine solche TDI-Zeilenkamera besteht aus mehreren nebeneinander liegenden Sensorzeilen und ermöglicht eine zeitverzögerte Mehrfachbelichtung eines bewegten Objektes. Am Ende jeder Belichtungsperiode werden die bislang erzeugten Ladungen zeilenweise in die jeweils nächst höhere Zeile verschoben. Während der folgenden Belichtungsperioden kommen weitere Ladungen hinzu, die aufsummiert, Zeile für Zeile weiter transportiert und schließlich nach einer Anzahl von Belichtungen, die der Zahl an Sensorzeilen entspricht, als Signal ausgegeben werden. Im vorliegenden Kontext kann eine solche TDI-Zeilenkamera genutzt werden, eine zeilenförmige Erfassung der Detektionslichtbündel durchzuführen, ohne auf die Verwendung eines Einzeilensensors angewiesen zu sein. So ist ein Detektionslichtbündel in der Regel breiter als eine einzelne Pixelzeile eines Einzeilensensors, so dass diese Pixelzeile von dem Detektionslichtbündel deutlich überstrahlt wird. Im Unterschied zu einem Einzeilensensor ist es mit einer TDI-Zeilenkamera möglich, die gesamte Breite des Detektionslichtbündels abzugreifen, ohne dass es zu einem Verschmieren des Detektionssignals kommt. Insbesondere muss hierzu nicht schrittweise gescannt werden. Vielmehr ist mit Hilfe einer TDI-Zeilenkamera ein kontinuierliches Scannen möglich.

Vorzugsweise bilden die Scaneinheit und die Optik ein telezentrisches System.

Nach einem weiteren Aspekt der Erfindung ist ein Verfahren zur mikroskopischen Abbildung einer Probe vorgesehen. Dieses Verfahren ist insbesondere vorgesehen, nach Art eines SPIM-, OPM- oder SCAPE-Verfahrens angewandt zu werden. Es kann auch mit gepulsten Lasern zur Zweiphotonenanregung kombiniert werden.

Die Erfindung wird im Folgenden anhand von Ausführungsbeispielen unter Bezugnahme auf die Figuren näher erläutert. Darin zeigen:
- Fig. 1: ein herkömmliches SCAPE-Mikroskop als Vergleichsbeispiel;
- Fig. 2: das herkömmliche SCAPE-Mikroskop nach Figur 1 aus einer anderen Blickrichtung;
- Fig. 3: ein erfindungsgemäßes Mikroskop, das nach Art eines SCAPE-Mikroskops arbeitet, als erstes Ausführungsbeispiel;
- Fig. 4: das erste Ausführungsbeispiel des erfindungsgemäßen Mikroskops aus einer anderen Blickrichtung;
- Fig. 5: eine schematische Darstellung zur Veranschaulichung, wie in dem ersten Ausführungsbeispiel die mit den Beleuchtungslichtbündeln beleuchten Probenbereiche auf den Detektor abgebildet werden;
- Fig. 6: eine schematische Darstellung entsprechend Figur 5 aus einer anderen Blickrichtung;
- Fig. 7: eine schematische Darstellung zur Veranschaulichung, wie in einem zweiten Ausführungsbeispiel des erfindungsgemäßen Mikroskops die mit den Beleuchtungslichtbündeln beleuchteten Probenbereiche auf den Detektor abgebildet werden;
- Fig. 8: eine schematische Darstellung entsprechend Figur 7 aus einer anderen Blickrichtung;
- Fig. 9: eine schematische Darstellung zur Veranschaulichung, wie in einem dritten nicht-anspruchsgemäßen Beispiel die mit den Beleuchtungslichtbündeln beleuchten Probenbereiche auf den Detektor abgebildet werden;
- Fig. 10: eine schematische Darstellung entsprechend Figur 9 aus einer anderen Blickrichtung;
- Fig. 11: eine schematische Darstellung entsprechend Figur 9 mit einer anderen geometrischen Darstellung der Lichtbündel;
- Fig. 12: eine schematische Darstellung entsprechend Figur 10 mit einer anderen geometrischen Darstellung der Lichtbündel;
- Fig. 13: ein Blockdiagramm mit beispielhaften Funktionskomponenten zur Realisierung eines erfindungsgemäßen Mikroskops, das nach Art eines SCAPE-Mikroskops arbeitet; und
- Fig. 14: ein Blockdiagramm mit beispielhaften Funktionskomponenten zur Realisierung eines erfindungsgemäßen Mikroskops, das nach Art eines SPIM-Mikroskops arbeitet.

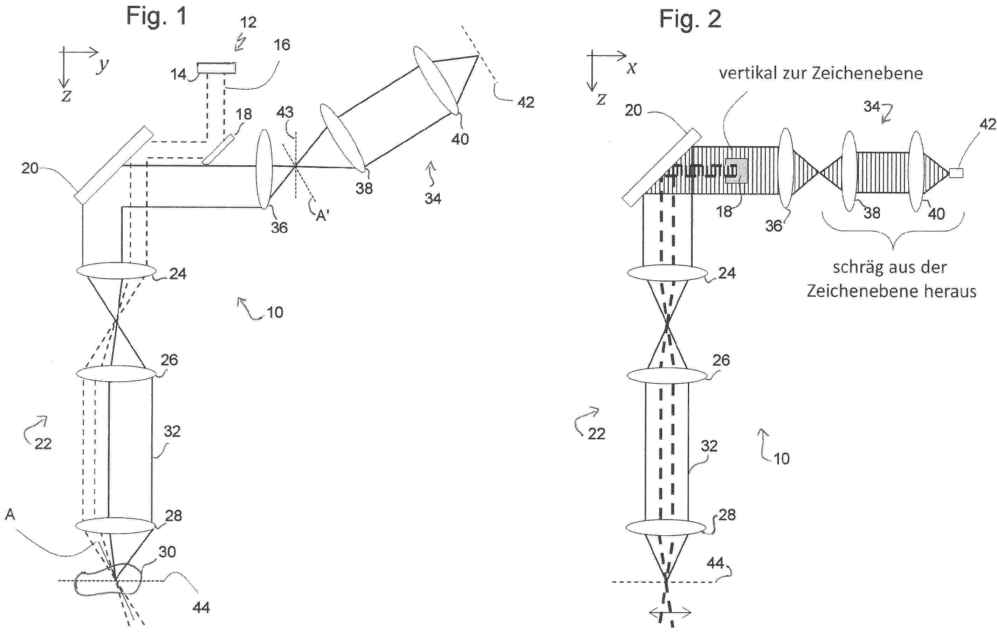

Zunächst wird anhand der Figuren 1 und 2 der Aufbau eines herkömmlichen SCAPE-Mikroskops 10 erläutert, auf den im Weiteren zur Erläuterung der erfindungsgemäßen Ausführungsbeispiele referenziert wird. In den Figuren 1 und 2 sowie allen weiteren Figuren wird jeweils auf ein orthogonales Koordinatensystem mit den Achsen x, y und z Bezug genommen.

Wie in den Figuren 1 und 2 gezeigt, enthält das SCAPE-Mikroskop 10 eine Beleuchtungseinheit 12 mit einer Lichtquelle 14, die ein Beleuchtungslichtbündel 16 aussendet. Das Beleuchtungslichtbündel 16 trifft auf einen Spiegel 18, der das Beleuchtungslichtbündel 16 in Richtung eines 2D-Scanspiegels 20 reflektiert. Der beispielsweise als Galvanometerspiegel oder MEMS-Spiegel ausgeführte Scanspiegel 20 ist sowohl um die x-Achse (in Figur 1 senkrecht zur Zeichenebene) als auch um die y-Achse (in Figur 2 senkrecht zur Zeichenebene) mittels eines in den Figuren nicht gezeigten Antriebs verkippbar. Das an dem Scanspiegel 20 reflektierte Beleuchtungslichtbündel 16 gelangt in eine Optik 22, die aus einer Scanlinse 24, einer Tubuslinse 26 und einem Objektiv 28 gebildet ist. Der Scanspiegel 20 befindet sich in einer zur hinteren Fokusebene des Objektivs 28 konjugierten Ebene. Der Scanspiegel 20 und die Optik 22 bilden ein telezentrisches System.

Wie in Figur 1 gezeigt, fällt das Beleuchtungslichtbündel 16 so auf den Scanspiegel 20, dass es längs der y-Achse versetzt in das Objektiv 28 eingestrahlt wird. Das Beleuchtungslichtbündel 16 leuchtet demnach nur einen außermittigen Teilbereich der Eintrittspupille des Objektivs 28 aus, wodurch es innerhalb der Probe 28 verkippt gegenüber der optischen Achse des Objektivs 28 propagiert. Das Beleuchtungslichtbündel 16 beleuchtet somit die Probe 28 längs eines linien- oder streifenförmigen Bereichs, der in Figur 1 mit A bezeichnet ist, und regt dort eine Probe 30 zur Emission von Fluoreszenzstrahlung an. Zur Vereinfachung der Darstellung ist die Probe 30 nur in Figur 1 gezeigt.

Das durch die Fluoreszenzstrahlung gegebene und in den Figuren 1 und 2 mit 32 bezeichnete Detektionslichtbündel gelangt wiederum in das Objektiv 30, das somit sowohl als Beleuchtungsobjektiv als auch als Detektionsobjektiv fungiert. Das Detektionslichtbündel 32 fällt nach Durchtritt durch die Tubuslinse 26 und die Scanlinse 24 auf den Scanspiegel 20, der das Detektionslichtbündel 32 so reflektiert, dass dieses an dem Spiegel 18 vorbeiläuft und in eine Aufrichtungsoptik 34 gelangt. Die Aufrichtungsoptik 34 umfasst ein zweites Objektiv 36, ein drittes Objektiv 38 sowie eine Tubuslinse 40, der ein Zeilendetektor 42 nachgeordnet ist. Durch die Rückführung auf den Abtastspiegel 20 wird das Detektionslichtbündel 32 ähnlich wie bei einem konfokalen Mikroskop entscannt. Auf diese Weise wird der beleuchtete Probenbereich A im Wege einer Zwischenabbildung in der Aufrichtungsoptik 34 in einen ortsfesten Streifen A' abgebildet. Der Streifen A' ist gegenüber einer Ebene 43 schräggestellt, die optisch konjugiert zu der in den Figuren 1 und 2 mit 44 bezeichneten Fokusebene der Optik 22 ist.

Wie in Figur 1 gezeigt, umfasst die Aufrichtungsoptik 34 eine erste Teiloptik in Form des Objektivs 36 sowie eine hierzu schräggestellte zweite Teiloptik, die aus dem Objektiv 38 und der Tubuslinse 40 gebildet ist. Diese beiden zueinander schräggestellten Teiloptiken 36 bzw. 38, 40 bewirken, dass der Streifen A' lagerichtig auf den Zeilendetektor 42 abgebildet wird. Durch die entscannende Wirkung des Scanspiegels 20 ist zudem gewährleistet, dass beleuchtete Probenbereich A über das ortsfeste Zwischenbild A' ortsfest auf den Zeilendetektor 42 abgebildet wird.

An dieser Stelle ist darauf hinzuweisen, dass die Darstellung des Detektionsstrahlengangs in Figur 2 stark vereinfacht ist. Tatsächlich verläuft der zwischen dem Scanspiegel 20 und dem Objektiv 36 liegende Teil des Detektionsstrahlengangs senkrecht zur Zeichenebene der Figur 2, während der daran in Richtung des Zeilendetektors 42 anschließende Teil des Detektionsstrahlengangs schräg aus der Zeichenebene der Figur 2 heraus verläuft.

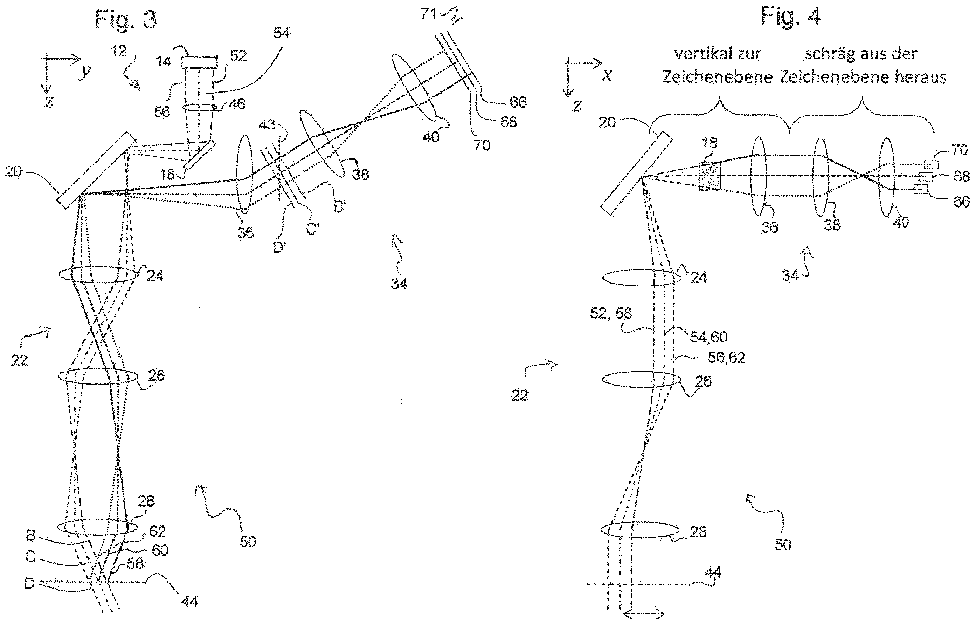

In den Figuren 3 und 4 ist ein Mikroskop 50 dargestellt, das eine erfindungsgemäße Weiterentwicklung des SCAPE-Mikroskops 10 nach den Figuren 1 und 2 darstellt. Das erfindungsgemäße Mikroskop 50 ist gegenüber dem herkömmlichen SCAPE-Mikroskop 10 dahingehend abgewandelt, dass es zu einem gegebenen Zeitpunkt die Probe nicht nur mit einem einzigen Beleuchtungslichtbündel, sondern mehreren, räumlich voneinander getrennten Beleuchtungslichtbündeln abtastet. Diejenigen Funktionskomponenten des Mikroskops 50, die mit denen des herkömmlichen SCAPE-Mikroskops 10 übereinstimmen, sind mit den in den Figuren 1 und 2 verwendeten Bezugszeichen versehen und werden im Folgenden nicht nochmals erläutert.

In dem Ausführungsbeispiel nach den Figuren 3 und 4 sendet die Lichtquelle 14 drei Beleuchtungslichtbündel 52, 54 und 56 aus. Zur Vereinfachung sind die Beleuchtungslichtbündel 52, 54 und 56 in den Figuren 3 und 4 nur in Form ihrer Hauptstrahlen dargestellt.

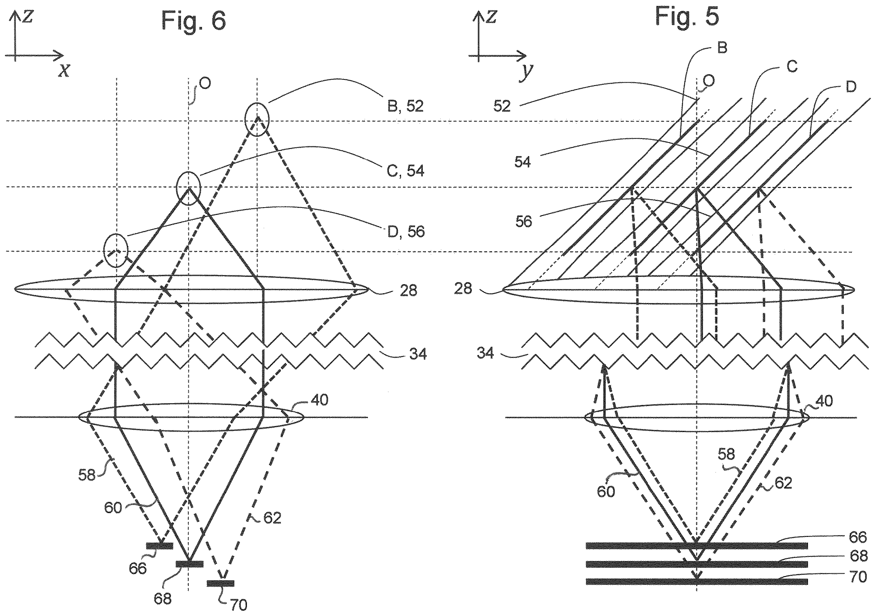

Die Beleuchtungslichtbündel 52, 54, 56 werden durch eine Linse 46 von dem Spiegel 18 reflektiert und von dort auf den Scanspiegel 20 gebündelt. Wie in Figur 3 gezeigt, fallen die Beleuchtungslichtbündel 52, 54, 56 derart gegeneinander verkippt auf den Scanspiegel 20, dass sie nach Durchtritt durch die Scanlinse 24 und die Tubuslinse 26 längs der y-Achse verkippt zueinander in die Eintrittspupille des Objektivs 28 gelangen. Diese Verkippung längs der y-Achse führt dazu, dass die Beleuchtungslichtbündel 52, 54, 56 innerhalb der Probe einen ersten Parallelversatz längs der x-Achse aufweisen (vgl. Figuren 5 und 6). Ferner werden die Beleuchtungslichtbündel, wie in Figur 4 gezeigt, an dem Scanspiegel 20 derart reflektiert, dass sie nach Durchtritt durch die Scanlinse 24 und die Tubuslinse 26 längs der x-Achse verkippt zueinander in die Eintrittspupille des Objektivs 28 fallen.

Diese Verkippung bewirkt, dass die Beleuchtungslichtbündel 52, 54, 56 innerhalb der Probe einen zweiten Parallelversatz längs der y-Achse aufweisen (vgl. Figuren 5 und 6).

Indem der Scanspiegel 20 um die x-Achse verkippt wird, wird die Probe mit den Beleuchtungslichtbündeln 52, 54, 56 längs der y-Achse gescannt. Dementsprechend wird die Probe mit den Beleuchtungslichtbündeln 52, 54, 56 längs der x-Achse gescannt, wenn der Scanspiegel 20 um die y-Achse verkippt wird.

Das Beleuchtungslichtbündel 52 beleuchtet innerhalb der Probe einen streifenförmigen Probenbereich B. Entsprechend beleuchtet das Beleuchtungslichtbündel 54 einen streifenförmigen Probenbereich C und das Beleuchtungslichtbündel 56 einen streifenförmigen Probenbereich D. Die Fluoreszenzstrahlung, die aus den beleuchteten Probenbereichen B, C und D stammt, gelangt in Form separater Detektionslichtbündel 58, 60 bzw. 62 nach Durchtritt durch das Objektiv 28, die Tubuslinse 26 und die Scanlinse 24 zurück zu dem Scanspiegel 20. Der Scanspiegel 20 reflektiert die Detektionslichtbündel 58, 60 und 62 in die Aufrichtungsoptik 34. In dieser werden Zwischenbilder der mit den Beleuchtungslichtbündeln B, C und D beleuchteten Probenbereiche erzeugt, die relativ zu der Ebene 43, die zur Fokusebene 44 der Optik 22 konjugiert ist, schräggestellt sind. In der vereinfachten Darstellung nach Figur 3 sind diese Zwischenbilder mit B', C' bzw. D' bezeichnet.

Das Mikroskop 50 weist einen aus drei Zeilensensoren 66, 68, 70 gebildeten Detektor 71 auf, der die Lichtbündel 58, 60 bzw. 62 erfasst. Dabei wird das Zwischenbild B' lagerichtig auf den Zeilensensor 66, das Zwischenbild C' lagerichtig auf den Zeilensensor 68 und das Zwischenbild D' lagerichtig auf den Zeilensensor 70 abgebildet. Wie in den Figuren 3 und 4 gezeigt, sind die Zeilensensoren 66, 68 und 70 entsprechend dem Versatz, den die beleuchteten Probenbereiche B, C und D innerhalb der Probe und entsprechend die Zwischenbilder B', C', D' aufweisen, versetzt zueinander.

In den Figuren 5 und 6 ist nochmals veranschaulicht, wie die mit den Beleuchtungslichtbündeln 52, 54, 56 beleuchteten, streifenförmigen Probenbereiche B, C bzw. D in Form der Detektionslichtbündel 58, 60 bzw. 62 auf die Zeilensensoren 66, 68 bzw. 70 abgebildet werden. Dabei korrespondiert Figur 5 mit Figur 3 und Figur 6 mit Figur 4. Die Figuren 5 und 6, in denen die Aufrichtungsoptik 34 nur angedeutet ist, zeigen insbesondere, dass die Zeilensensoren 66, 68 und 70 sowohl axial, d.h. längs z-Achse bzw. optischen Achse O des Objektivs 28, als auch lateral, d.h. längs der x-Achse versetzt zueinander angeordnet sind. In den Figuren 5 und 6 sind zudem die Scanrichtungen angedeutet, in denen die Beleuchtungslichtbündel 52, 54, 56 mit Verkippen des Abtastspiegels 20 bewegt werden. Wird der Scanspiegel 20 um die x-Achse verkippt, so werden die Beleuchtungslichtbündel 52, 54 und 56 längs der y-Achse bewegt. Wird dagegen der Scanspiegel 20 um die y-Achse verkippt, so werden die Beleuchtungslichtbündel 52, 54 und 56 längs der x-Achse bewegt.

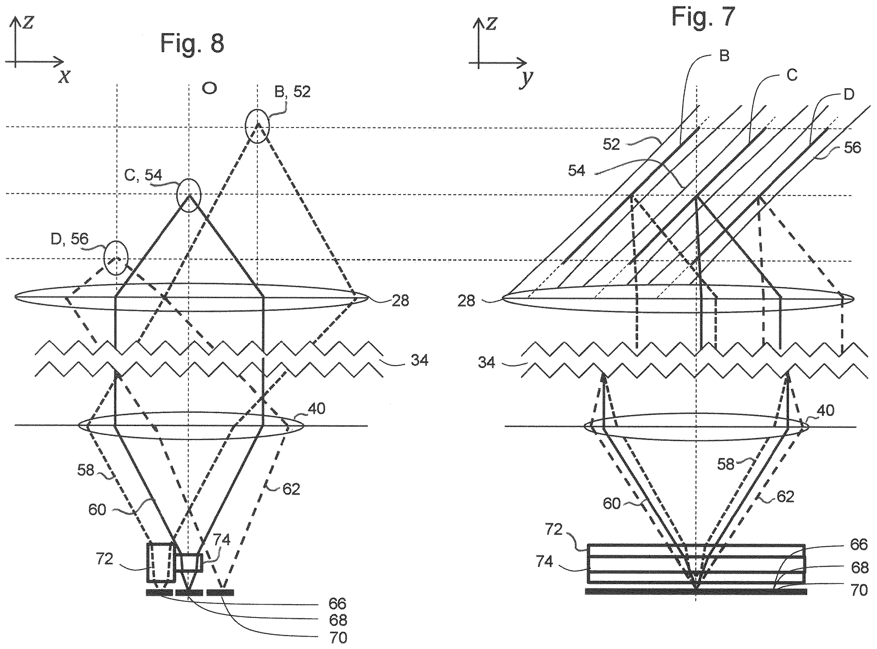

In den Figuren 7 und 8 ist eine abgewandelte Ausführungsform des Mikroskops 50 als zweites Ausführungsbeispiel gezeigt. In diesem Ausführungsbeispiel sind den Zeilensensoren 66 und 68 Glasblöcke 72 bzw. 74 vorgeordnet. Die Glasblöcke 72, 74 dienen dazu, den Versatz der Beleuchtungslichtbündel längs der optischen Achse O des Objektivs 28 zu kompensieren. Die Zeilensensoren 66, 68, 70 können so in einer Ebene angeordnet sein. Insbesondere ist es auch möglich, an Stelle der drei Zeilensensoren 66, 68, 70 einen einstückigen Flächensensor mit den Zeilensensoren entsprechenden, separaten Sensorbereichen vorzusehen.

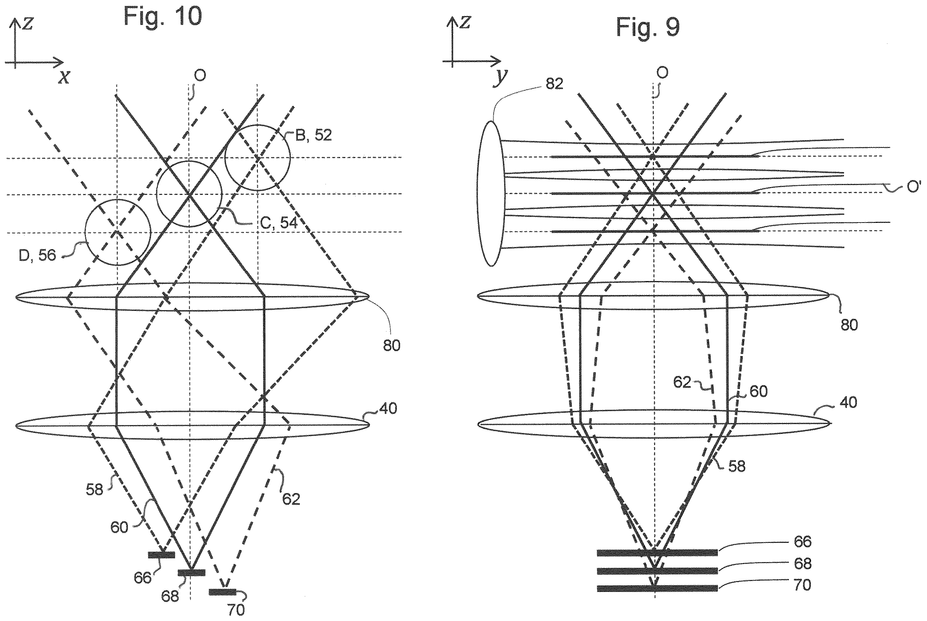

Die Figuren 9 und 10 zeigen ein drittes nicht-anspruchsgemäßes Beispiel, in dem das Mikroskop nach Art eines SPIM-Mikroskops arbeitet. Dementsprechend sind in dem dritten Beispiel probenseitig zwei separate Objektive vorgesehen, von denen ein Objektiv 80 als Detektionsobjektiv und ein Objektiv 82 (vgl. Figur 9) als Beleuchtungsobjektiv fungiert. Die beiden Objektive 80 und 82 sind mit ihren optischen Achsen senkrecht zueinander angeordnet.

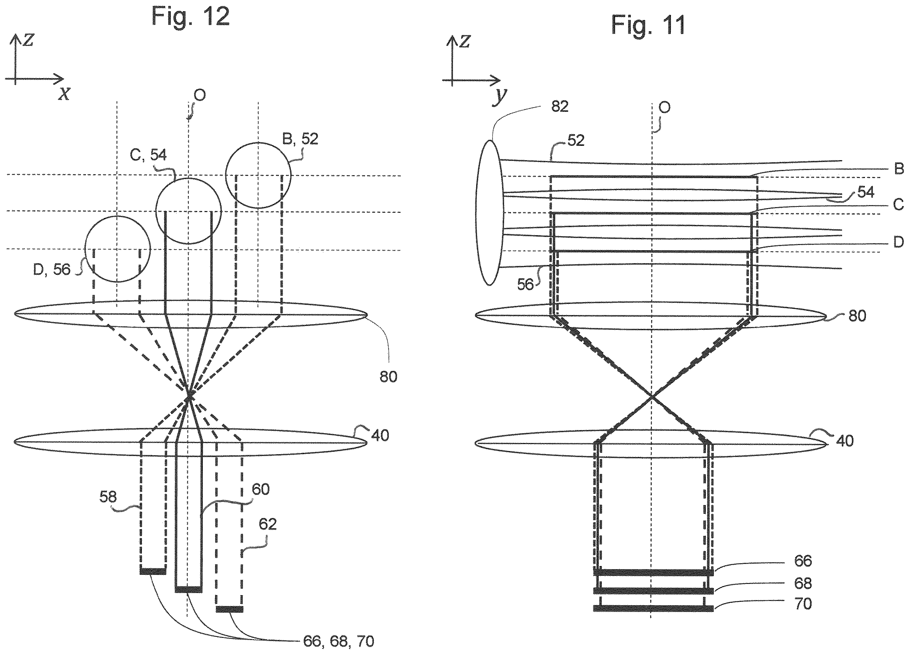

In den Figuren 11 und 12 ist das dritte Beispiel mit einer geometrischen Darstellung der jeweiligen Lichtbündel gezeigt.

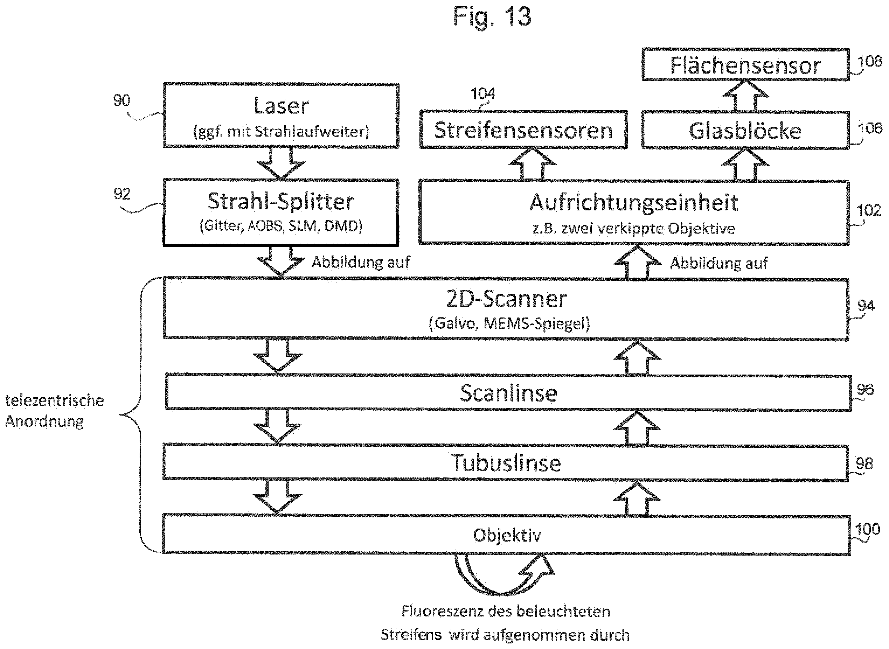

Figur 13 zeigt an Hand eines Blockdiagramms noch einmal ein Beispiel für die Realisierung des erfindungsgemäßen Mikroskops nach Art eines SCAPE-Mikroskops. Dabei deuten in der Darstellung nach Figur 13 die Pfeile zwischen einzelnen Funktionskomponenten den Weg des Beleuchtunglichts bzw. des Detektionslichtes innerhalb des Mikroskops an.

Die Realisierung nach Figur 13 umfasst als beispielhafte Funktionskomponenten einen Laser 90 als Lichtquelle, der einen Strahlaufweiter aufweisen kann, einen Strahlteiler 92 in Form eines Gitters, eines akustooptischen Strahlteilers (AOBS), eines räumlichen Lichtmodulators (SLM) oder einer digitalen Mikrospiegelanordnung, einen 2D-Scanner 94 in Form eines oder mehrerer Galvanometerspiegel oder MEMS-Spiegel, eine Scanlinse 96, eine Tubuslinse 98 sowie ein Objektiv 100, das sowohl der Beleuchtung als auch der Detektion dient. Der 2D-Scanner 94, die Scanlinse 96, die Tubuslinse 98 und das Objektiv 100 bilden ein telezentrisches System. In dem an den 2D-Scanner 94 anschließenden Teil des Detektionslichtwegs enthält das Mikroskop ferner eine Aufrichtungsoptik 102, die z.B. zwei gegeneinander verkippte Objektive aufweist, sowie mehrere Zeilen- bzw. Streifensensoren 104 oder, in einer alternativen Ausführungsform, einen oder mehrere Glasblöcke, der bzw. die einem Flächensensor vorgeordnet sind.

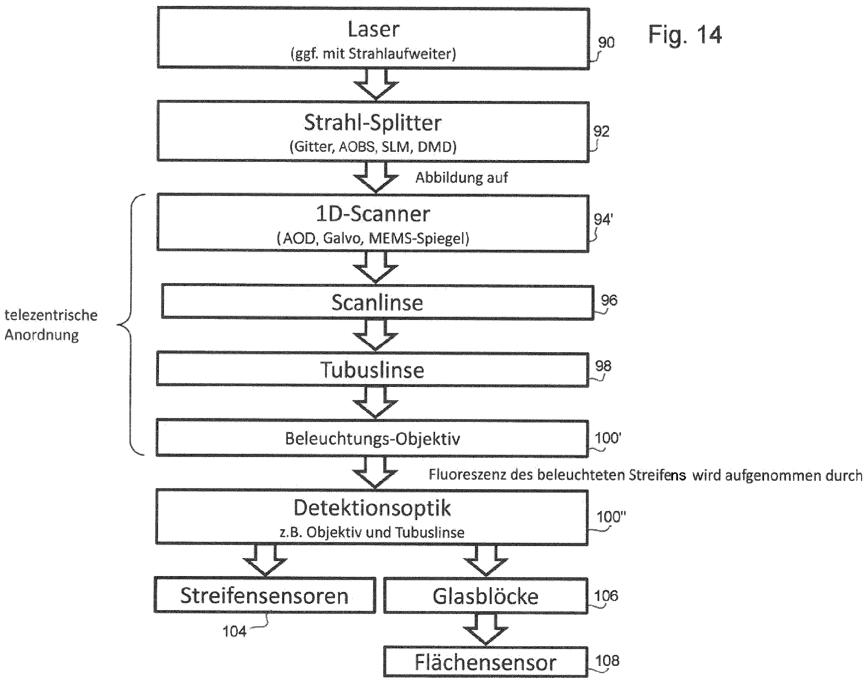

Schließlich zeigt Figur 14 ein Blockdiagramm mit Funktionskomponenten zur Realisierung des erfindungsgemäßen Mikroskops als SPIM-Mikroskop. Wiederum deuten die Pfeile zwischen den Funktionskomponenten den Lichtweg des Beleuchtungslichts bzw. des Detektionslichts an. Wie der Figur 14 zu entnehmen ist, unterscheidet sich die SPIM-Realisierung von der SCAPE-Realisierung lediglich durch die Verwendung eines 1D-Scanners 94' (wie beispielsweise eines akustooptischen Deflektors (AOD), eines Galvanometerspiegels oder eines MEMS-Spiegels) an Stelle des 2D-Scanners 94 sowie die Verwendung zweier separater probenseitiger Objektive 100', 100" als Beleuchtungs- bzw. Detektionsobjektiv an Stelle des einzigen probenseitigen Objektivs 100.

Die vorstehend beschriebenen Ausführungsformen sind lediglich beispielhaft zu verstehen. So sind eine Reihe von Abwandlungen zur Realisierung der erfindungsgemäßen Lehre denkbar. Beispielsweise ist in der Ausführungsform nach den Figuren 3 und 4 der Spiegel 18 zur Einkopplung des Beleuchtungslichts vorgesehen. An Stelle des Spiegels 18 kann jedoch auch ein dichroitisches Spiegelelement vorgesehen sein, welches das Beleuchtungslicht in Transmission einkoppelt und das das Detektionslicht in Reflektion auf den Detektor leitet (oder umgekehrt).

Die vorstehend beschriebenen Ausführungsformen betreffen die Realisierung des erfindungsgemäßen Mikroskops nach Art eines SCAPE-Mikroskops oder eines SPIM-Mikroskops. Wie schon weiter oben erwähnt, ist die Erfindung jedoch nicht auf diese Realisierungen beschränkt. So ist beispielsweise auch eine Realisierung als OPM-Mikroskop denkbar. Insbesondere ist es bezugnehmend auf die SCAPE-Ausführung nach den Figuren 3 und 4 auch möglich, anstelle der dort vorgesehenen Verkippung des 2D-Scanspiegels 20 das Objektiv 36 im Sinne einer OPM-Anwendung (vgl. hierzu die eingangs genannte Veröffentlichung von Kumar et al.) zu bewegen, um die synchrone Verschiebung der Beleuchtungslichtbündel und der abzubildenden Ebene zu bewirken. In diesem Fall ist dann eine Strahleinkopplung über das Objektiv 36 erforderlich. Während also die erfindungsgemäße Scaneinheit in der SCAPE-Anwendung einen 2D-Scanspiegel aufweist, umfasst sie in der OPM-Anwendung (unter Bezugnahme auf die Figuren 3 und 4) einen Aktor, der das Objektiv 36 zum Versatz der Beleuchtung längs der y-Achse entlang der optischen Achse verschiebt, sowie einen Scanner (oder alternativ eine Zylinderlinse) zum Versatz der Beleuchtung längs der x-Achse.

### Bezugszeichenliste

- 10: herkömmliches SCAPE-Mikroskop
- 12: Beleuchtungseinheit
- 14: Lichtquelle
- 16: Beleuchtungslichtbündel
- 18: Spiegel
- 20: Scanspiegel
- 22: Optik
- 24: Scanlinse
- 26: Tubuslinse
- 28: Objektiv
- 30: Probe
- 32: Detektionslichtbündel
- 34: Aufrichtungsoptik
- 36: Objektiv
- 38: Objektiv
- 40: Tubuslinse
- 42: Zeilensensor
- 43: Ebene
- 44: Fokusebene
- 46: Linse
- 50: Mikroskop
- 52, 54, 56: Beleuchtungslichtbündel
- 58, 60, 62: Detektionslichtbündel
- 66, 68, 70: Zeilensensoren
- 71: Detektor
- 72, 74: Glasblöcke
- 80: Detektionsobjektiv
- 82: Beleuchtungsobjektiv
- 90: Laser
- 92: Strahlteiler
- 94: 2D-Scanner
- 96: Scanlinse
- 98: Tubuslinse
- 100: Objektiv
- 100', 100": Objektive
- 104: Streifensensoren
- 106: Glasblöcke

## Patentansprüche

1. Mikroskop (50) zum Abbilden einer Probe (30), umfassend:
eine Beleuchtungseinheit (12) zum Aussenden von Beleuchtungslicht auf die Probe (30),
einen Detektor (71) zum Erfassen von Detektionslicht, das aus der Probe (30) stammt,
eine Optik (22) zum Fokussieren des von der Beleuchtungseinheit (12) ausgesendeten Beleuchtungslichtes in die Probe (30) und zum Fokussieren des aus der Probe (30) stammenden Detektionslichtes auf den Detektor (71), und
eine Scaneinheit (20) zum Scannen der Probe (30) mit dem Beleuchtungslicht,
wobei die Beleuchtungseinheit (12) ausgebildet ist, das Beleuchtungslicht in Form von separaten Beleuchtungslichtbündeln (52, 54, 56) derart auf die Scaneinheit (20) auszusenden, dass die Beleuchtungslichtbündel (52, 54, 56) beim Scannen der Probe (30) gleichzeitig auf räumlich voneinander getrennte, streifenförmige Probenbereiche (A, B, C) fokussiert werden,
der Detektor (71) ausgebildet ist, das Detektionslicht in Form von separaten, aus den räumlich voneinander getrennten, streifenförmigen Probenbereichen (A, B, C) stammenden Detektionslichtbündeln (58, 60, 62) gleichzeitig und räumlich voneinander getrennt zu erfassen,
die von den Beleuchtungslichtbündeln (52, 54, 56) beleuchteten Probenbereiche (A, B, C) in mehreren Probenebenen liegen,
der Detektor (71) mehrere Teildetektoren (66, 68, 70) umfasst, die jeweils einer der Probenebenen zugeordnet sind, wobei der jeweilige Teildetektor (66, 68, 70) dasjenige Detektionslichtbündel (58, 60, 62) erfasst, das aus der diesem Teildetektor (66, 68, 70) zugeordneten Probenebene stammt,
und die Teildetektoren in einem Schärfentiefenbereich einer dem Detektor vorgeordneten Detektionsoptik angeordnet sind,
**dadurch gekennzeichnet, dass** die Optik (22) ein einziges Objektiv (28) enthält, das ein Beleuchtungsobjektiv zum Fokussieren der von der Beleuchtungseinheit (12) ausgesendeten Beleuchtungslichtbündel (52, 54, 56) in die Probe (30) und zugleich ein Detektionsobjektiv zum Fokussieren des aus der Probe (30) stammenden Detektionslichtbündels (58, 60, 62) auf den Detektor (71) bildet.

2. Mikroskop (50) nach Anspruch 1, **dadurch gekennzeichnet, dass** die Probenebenen parallel zueinander versetzt sind.

3. Mikroskop (50) nach Anspruch 1 oder 2, **dadurch gekennzeichnet, dass** die Beleuchtungseinheit (12), die Scaneinheit (20) und die Optik (22) derart zusammenwirken, dass die Beleuchtungslichtbündel (52, 54, 56) in der Probe
(30) einen gegenseitigen Parallelversatz aufweisen.

4. Mikroskop (50) nach Anspruch 3, **dadurch gekennzeichnet, dass** der Parallelversatz einen ersten Parallelversatz längs einer ersten Achse (x), die senkrecht zur optischen Achse eines in der Optik (22) enthaltenen Detektionsobjektivs (28) liegt, und/oder einen zweiten Parallelversatz längs
einer zweiten Achse (y) beinhaltet, die senkrecht zur optischen Achse (O) des Detektionsobjektivs (28) liegt, wobei die erste Achse (x) und die zweite Achse (y) senkrecht zueinander ausgerichtet sind.

5. Mikroskop (50) nach einem der vorhergehenden Ansprüche, dadurchgekennzeichnet, dass die Scaneinheit (20) ausgebildet ist, die Probe (30) mit den Beleuchtungslichtbündeln (52, 54, 56) längs einer ersten Achse (x) zu scannen, die senkrecht zur optischen Achse (O) eines in der Optik (22) enthaltenen Detektionsobjektivs (28) liegt, und/oder längs einer zweiten Achse (y) zu scannen, die senkrecht zur optischen Achse (y) des Detektionsobjektivs (28) liegt, wobei die erste Achse (x) und die zweite Achse (y) senkrecht zueinander ausgerichtet sind.

6. Mikroskop (50) nach Anspruch 5, **dadurch gekennzeichnet, dass** die Scaneinheit einen Scanspiegel (20) umfasst, wobei der Scanspiegel (20) um die zweite Achse (y) verkippbar ist, um die Probe (30) mit den Beleuchtungslichtbündeln (52, 54, 56) längs der ersten Achse (x) zu scannen, und/oder der Scanspiegel (20) um die erste Achse (x) verkippbar ist, um die Probe (30) mit den Beleuchtungslichtbündeln (52, 54, 56) längs der zweiten
Achse (y) zu scannen.

7. Mikroskop (50) nach einem der vorhergehenden Ansprüche, **dadurch gekennzeichnet, dass** die Scaneinheit (20) zusätzlich ausgebildet ist, die auf den Detektor (71) fokussierten Detektionslichtlichtbündel (58, 60, 62) zu entscannen.

8. Mikroskop (50) nach einem der vorhergehenden Ansprüche, **dadurch gekennzeichnet**, die Beleuchtungseinheit (12) und die Scaneinheit (20) derart zusammenwirken,
dass die Beleuchtungslichtbündel (52, 54, 56) um die zweite Achse (y) verkippt zueinander in eine Eintrittspupille des Objektivs (28) fallen, um in der Probe (30) den ersten Parallelversatz längs der ersten Achse (x) zu bewirken, und/oder die Beleuchtungseinheit (12) und die Scaneinheit (20) derart zusammenwirken, dass die Beleuchtungslichtbündel (52, 54, 56) um die zweite Achse (x) verkippt zueinander in die Eintrittspupille des Objektivs (28) fallen, um in der Probe (30) den zweiten Parallelversatz längs der zweiten Achse (y) zu bewirken.

9. Mikroskop (50) nach einem der vorhergehenden Ansprüche, **dadurch gekennzeichnet, dass** die Beleuchtungseinheit (12) und die Scaneinheit (20) derart zusammenwirken, dass die Beleuchtungslichtbündel (52, 54, 56) jeweils nur einen außermittigen Teilbereich einer Eintrittspupille des Objektivs (28) ausleuchten.

10. Mikroskop (50) nach einem der vorhergehenden Ansprüche, **gekennzeichnet durch** eine der Scaneinheit (20) in Ausbreitungsrichtung des Detektionslichtes nachgeordnete Aufrichtungsoptik (34) mit einer ersten Teiloptik (36) zum Erzeugen eines Zwischenbildes und einer gegenüber der ersten Teiloptik schräggestellten zweiten Teiloptik (38, 40) zur lagerichtigen Abbildung des Zwischenbildes auf den Detektor (71).

11. Mikroskop (50) nach einem der vorhergehenden Ansprüche, **gekennzeichnet durch** mindestens ein dem Detektor (71) vorgeordnetes Element (72, 74) zur Beeinflussung der optischen Weglänge, das den Versatz der Probenebenen kompensiert.

12. Mikroskop nach einem der vorhergehenden Ansprüche, **dadurch gekennzeichnet, dass** der Detektor (71) ein Flächendetektor mit mehreren Detektorabschnitten ist, welche die Teildetektoren bilden.

13. Mikroskop (50) nach einem der vorhergehenden Ansprüche, **dadurch gekennzeichnet, dass** der Detektor (71) mehrere Zeilendetektoren (66, 68, 70) umfasst, welche die Teildetektoren bilden.

14. Mikroskop (50) nach Anspruch 13, **dadurch gekennzeichnet, dass** die Zeilendetektoren (66, 68, 70) längs der optischen Achse einer dem Detektor vorgeordneten Detektionsoptik mit einem Versatz zueinander angeordnet sind, der dem Versatz der zugehörigen Probenebenen entspricht.

15. Mikroskop (50) nach einem der vorhergehenden Ansprüche, **dadurch gekennzeichnet, dass** die Beleuchtungseinheit (12) eine einzige Lichtquelle (14) aufweist, welche die separaten Beleuchtungslichtbündel (52, 54, 56) aussendet.

16. Mikroskop (50) nach einem der vorhergehenden Ansprüche, **dadurch gekennzeichnet, dass** die Beleuchtungseinheit (12) mehrere Lichtquellen aufweist, die jeweils eines der Beleuchtungslichtbündel (52, 54, 56) aussenden.

17. Mikroskop (50) nach einem der vorhergehenden Ansprüche, **dadurch gekennzeichnet, dass** die Beleuchtungseinheit (12) ausgebildet ist, die Beleuchtungslichtbündel (52, 54, 56) mit unterschiedlichen Wellenlängen
auszusenden.

18. Mikroskop (50) nach einem der vorhergehenden Ansprüche, **dadurch gekennzeichnet, dass** der Detektor eine TDI-Zeilenkamera umfasst.

19. Mikroskop (50) nach einem der vorhergehenden Ansprüche, **dadurch gekennzeichnet, dass** die Scaneinheit (20) und die Optik (22) ein telezentrisches System bilden.

20. Verfahren zur mikroskopischen Abbildung einer Probe (30), bei dem mittels einer Beleuchtungseinheit (12) Beleuchtungslicht auf die Probe (30) ausgesendet wird,
mittels eines Detektors (71) Detektionslicht erfasst wird, das aus der Probe (30) stammt,
mittels einer Optik (22) das von der Beleuchtungseinheit (12) ausgesendete Beleuchtungslicht in die Probe (30) fokussiert wird und das aus der Probe (30) stammende Detektionslicht auf den Detektor (71) fokussiert wird,
wobei mittels einer Scaneinheit (20) die Probe (30) mit dem Beleuchtungslicht gescannt und das auf den Detektor (71) fokussierte Detektionslicht entscannt wird,
das Beleuchtungslicht in Form von separaten Beleuchtungslichtbündeln derart auf die Scaneinheit (20) ausgesendet wird, dass die Beleuchtungslichtbündel (52, 54, 56) beim Scannen der Probe (30) gleichzeitig auf räumlich voneinander getrennte, streifenförmige Probenbereiche (A, B, C) fokussiert werden,
das Detektionslicht mittels des Detektors (71) in Form von separaten, aus den räumlich voneinander getrennten, streifenförmigen Probenbereichen (A, B, C) stammenden Detektionslichtbündeln (58, 60, 62) gleichzeitig und räumlich voneinander getrennt erfasst wird,
die von den Beleuchtungslichtbündeln (52, 54, 56) beleuchteten Probenbereiche (A, B, C) in mehreren Probenebenen liegen,
der Detektor (71) mehrere Teildetektoren (66, 68, 70) umfasst, die jeweils einer der Probenebenen zugeordnet sind, wobei der jeweilige Teildetektor (66, 68, 70) dasjenige Detektionslichtbündel (58, 60, 62) erfasst, das aus der diesem Teildetektor (66, 68, 70) zugeordneten Probenebene stammt, und dass die Teildetektoren in einem Schärfentiefenbereich einer dem Detektor vorgeordneten Detektionsoptik angeordnet sind,
**dadurch gekennzeichnet, dass** die Optik (22) ein einziges Objektiv enthält, das ein Beleuchtungsobjektiv zum Fokussieren der von der Beleuchtungseinheit (12) ausgesendeten Beleuchtungslichtbündel (52, 54, 56) in die Probe (30) und zugleich ein Detektionsobjektiv zum Fokussieren des aus der Probe (30) stammenden Detektionslichtbündels (58, 60, 62) auf den Detektor (71) bildet.

## Claims

1. A microscope (50) for imaging a sample (30), comprising:
an illumination unit (12) for emitting illumination light onto the sample (30),
a detector (71) for detecting detection light originating from the sample (30),
optics (22) for focusing the illumination light, emitted by the illumination unit (12), into the sample (30) and for focusing the detection light, originating from the sample (30), onto the detector (71), and
a scanning unit (20) for scanning the sample (30) with the illumination light,
wherein the illumination unit (12) is configured to emit the illumination light in the form of separate illumination light beams (52, 54, 56) onto the scanning unit (20) such that the illumination light beams (52, 54, 56) are simultaneously focused on spatially separated, strip-shaped sample areas (A, B, C) when scanning the sample (30),
the detector (71) is configured to detect the detection light in the form of separate detection light beams (58, 60, 62), originating from the spatially separated, strip-shaped sample areas (A, B, C) simultaneously and spatially separated from one another,
the sample areas (A, B, C), illuminated by the illuminating light beams (52, 54, 56), are located in several sample planes,
the detector (71) comprises several partial detectors (66, 68, 70), each of which is assigned to one of the sample planes, wherein the respective partial detector (66, 68, 70) detects the detection light beam (58, 60, 62), originating from the sample plane assigned to this partial detector (66, 68, 70),
and the partial detectors are arranged in a depth of field of detection optics, arranged upstream of the detector,
**characterized in that** the optics (22) simultaneously contains a single objective (28) which forms an illumination objective for focusing the illumination light beams (52, 54, 56), emitted by the illumination unit (12) into the sample (30), and a detection objective for focusing the detection light beam (58, 60, 62), originating from the sample (30), onto the detector (71).

2. The microscope (50) according to claim 1, **characterized in that** the sample planes are offset parallel to one another.

3. The microscope (50) according to claim 1 or 2, **characterized in that** the illumination unit (12), the scanning unit (20) and the optics (22) interact in such a way that the illumination light beams (52, 54, 56) in the sample (30) have a mutual parallel offset.

4. The microscope (50) according to claim 3, **characterized in that** the parallel offset includes a first parallel offset along a first axis (x) which is perpendicular to the optical axis of a detection objective (28), contained in the optics (22), and/or a second parallel offset along a second axis (y) which is perpendicular to the optical axis (O) of the detection objective (28), wherein the first axis (x) and the second axis (y) are aligned perpendicular to one another.

5. The microscope (50) according to any one of the preceding claims, **characterized in that** the scanning unit (20) is configured to scan the sample (30) with the illuminating light beams (52, 54, 56) along a first axis (x) which is perpendicular to the optical axis (O) of a detection objective (28), contained in the optics (22), and/or along a second axis (y) which is perpendicular to the optical axis (y) of the detection objective (28), wherein the first axis (x) and the second axis (y) are perpendicular to each other.

6. The microscope (50) according to claim 5, **characterized in that** the scanning unit comprises a scanning mirror (20), wherein the scanning mirror (20) is tiltable about the second axis (y) in order to scan the sample (30) with the illumination light beams (52, 54, 56) along the first axis (x), and/or the scanning mirror (20) is tiltable about the first axis (x) in order to scan the sample (30) with the illumination light beams (52, 54, 56) along the second axis (y).

7. The microscope (50) according to any one of the preceding claims, **characterized in that** the scanning unit (20) is additionally configured to descan the detection light beams (58, 60, 62), focused on the detector (71).

8. The microscope (50) according to any one of the preceding claims, **characterized in** the illumination unit (12) and the scanning unit (20) cooperate in such a way that the illumination light beams (52, 54, 56), tilted relative to one another about the second axis (y), are incident into an entrance pupil of the objective (28) in order to effect the first parallel offset along the first axis (x) in the sample (30), and/or the illumination unit (12) and the scanning unit (20) cooperate in such a way that the illuminating light beams (52, 54, 56), tilted relative to one another about the second axis (x), are incident into the entrance pupil of the objective (28) in order to cause the second parallel offset along the second axis (y) in the sample (30).

9. The microscope (50) according to any one of the preceding claims, **characterized in that** the illumination unit (12) and the scanning unit (20) interact in such a way that the illumination light beams (52, 54, 56) each illuminate only an off-centre partial area of an entrance pupil of the objective (28).

10. The microscope (50) according to any one of the preceding claims, **characterized by** an erecting optics (34), arranged downstream of the scanning unit (20) in the propagation direction of the detection light, with a first partial optics (36) for generating an intermediate image and a second partial optics (38, 40), inclined relative to the first partial optics for imaging the intermediate image in the correct position on the detector (71).

11. The microscope (50) according to any one of the preceding claims, **characterized by** at least one element (72, 74) arranged upstream of the detector (71) for influencing the optical path length, which compensates for the offset of the sample planes.

12. The microscope according to any one of the preceding claims, **characterized in that** the detector (71) is a surface detector with several detector portions which form the partial detectors.

13. The microscope (50) according to any one of the preceding claims, **characterized in that** the detector (71) comprises several line detectors (66, 68, 70) which form the partial detectors.

14. The microscope (50) according to claim 13, **characterized in that** the line detectors (66, 68, 70) are arranged along the optical axis of a detection optics, arranged upstream of the detector, with an offset from one another which corresponds to the offset of the associated sample planes.

15. The microscope (50) according to any one of the preceding claims, **characterized in that** the illumination unit (12) has a single light source (14) which emits the separate illumination light beams (52, 54, 56).

16. The microscope (50) according to any one of the preceding claims, **characterized in that** the illumination unit (12) has several light sources, each emitting one of the illumination light beams (52, 54, 56).

17. The microscope (50) according to any one of the preceding claims, **characterized in that** the illumination unit (12) is configured to emit the illumination light beams (52, 54, 56) with different wavelengths.

18. The microscope (50) according to any one of the preceding claims, **characterized in that** the detector comprises a TDI line camera.

19. The microscope (50) according to any one of the preceding claims, **characterized in that** the scanning unit (20) and the optics (22) form a telecentric system.

20. A method for microscopically imaging a sample (30), in which illuminating light is emitted onto the sample (30) by means of an illumination unit (12),
in which detection light, originating from the sample (30), is detected by means of a detector (71),
in which, by means of an optics (22), the illumination light, emitted by the illumination unit (12), is focussed into the sample (30) and in which the detection light, originating from the sample (30), is focussed onto the detector (71),
wherein the sample (30) is scanned with the illumination light by means of a scanning unit (20) and the detection light, focused on the detector (71), is descanned,
wherein the illuminating light is emitted onto the scanning unit (20) in the form of separate illuminating light beams such that the illuminating light beams (52, 54, 56) are simultaneously focused onto spatially separated, strip-shaped sample areas (A, B, C) when scanning the sample (30),
the detection light is detected by the detector (71) in the form of separate detection light beams (58, 60, 62) originating from the spatially separated, strip-shaped sample areas (A, B, C) simultaneously and spatially separated from one another,
the sample areas (A, B, C), illuminated by the illuminating light beams (52, 54, 56), are located in several sample planes,
the detector (71) comprises several partial detectors (66, 68, 70), each of which is assigned to one of the sample planes, wherein the respective partial detector (66, 68, 70) detects the detection light beam (58, 60, 62), which originates from the sample plane, assigned to this partial detector (66, 68, 70), and which are arranged in a depth of field of a detection optics, arranged upstream of the detector,
**characterized in that** the optics (22) contains a single objective which forms an illumination objective for focusing the illumination light beams (52, 54, 56), emitted by the illumination unit (12) into the sample (30), and simultaneously a detection objective for focusing the detection light beam (58, 60, 62), originating from the sample (30), onto the detector (71).

## Revendications

1. Microscope (50) pour reproduire un échantillon (30), comprenant :
une unité d'éclairage (12) pour émettre une lumière d'éclairage sur l'échantillon (30),
un détecteur (71) pour détecter une lumière de détection qui provient de l'échantillon (30),
une optique (22) pour focaliser la lumière d'éclairage émise par l'unité d'éclairage (12) dans l'échantillon (30) et pour focaliser la lumière de détection provenant de l'échantillon (30) sur le détecteur (71), et
une unité de balayage (20) pour balayer l'échantillon (30) avec la lumière d'éclairage,
dans lequel l'unité d'éclairage (12) est réalisée pour émettre la lumière d'éclairage sous forme de faisceaux lumineux d'éclairage (52, 54, 56) distinctes sur l'unité de balayage (20) de sorte que les faisceaux lumineux d'éclairage (52, 54, 56) soient focalisés simultanément sur des zones (A, B, C) d'échantillon en forme de bandes, séparées les unes des autres dans l'espace lors du balayage de l'échantillon (30),
le détecteur (71) est réalisé pour détecter la lumière de détection sous forme de faisceaux lumineux de détection (58, 60, 62) distincts, provenant des zones (A, B, C) d'échantillon en forme de bandes, séparées les unes des autres dans l'espace, simultanément et séparément les unes des autres dans l'espace,
les zones (A, B, C) d'échantillon éclairées par les faisceaux lumineux d'éclairage (52, 54, 56) se trouvent dans plusieurs plans d'échantillon,
le détecteur (71) comprend plusieurs détecteurs partiels (66, 68, 70) qui sont associés chacun à l'un des plans d'échantillon, dans lequel le détecteur partiel (66, 68, 70) respectif détecte le faisceau lumineux de détection (58, 60, 62) qui provient du plan d'échantillon associé à ce détecteur partiel (66, 68, 70),
et les détecteurs partiels sont disposés dans une plage de profondeur de champ d'une optique de détection située en amont du détecteur,
**caractérisé en ce que** l'optique (22) contient un seul objectif (28) qui forme un objectif d'éclairage pour focaliser les faisceaux lumineux d'éclairage (52, 54, 56) émis par l'unité d'éclairage (12) dans l'échantillon (30) et en même temps un objectif de détection pour focaliser le faisceau lumineux de détection (58, 60, 62) provenant de l'échantillon (30) sur le détecteur (71).

2. Microscope (50) selon la revendication 1, **caractérisé en ce que** les plans d'échantillon sont décalés les uns des autres parallèlement.

3. Microscope (50) selon la revendication 1 ou la revendication 2, **caractérisé en ce que** l'unité d'éclairage (12), l'unité de balayage (20) et l'optique (22) interagissent de sorte que les faisceaux lumineux d'éclairage (52, 54, 56) dans l'échantillon (30) présentent un décalage parallèle réciproque.

4. Microscope (50) selon la revendication 3, **caractérisé en ce que** le décalage parallèle comporte un premier décalage parallèle le long d'un premier axe (x), qui se situe perpendiculairement à l'axe optique d'un objectif de détection (28) contenu dans l'optique (22), et/ou un deuxième décalage parallèle le long d'un deuxième axe (y), qui se situe perpendiculairement à l'axe optique (O) de l'objectif de détection (28), dans lequel le premier axe (x) et le deuxième axe (y) sont orientés perpendiculairement l'un à l'autre.

5. Microscope (50) selon l'une quelconque des revendications précédentes, **caractérisé en ce que** l'unité de balayage (20) est réalisée pour balayer l'échantillon (30) avec les faisceaux lumineux d'éclairage (52, 54, 56) le long d'un premier axe (x) qui se situe perpendiculairement à l'axe optique (O) d'un objectif de détection (28) contenu dans l'optique (22), et/ou pour le balayer le long d'un deuxième axe (y) qui se situe perpendiculairement à l'axe optique (y) de l'objectif de détection (28), dans lequel le premier axe (x) et le deuxième axe (y) sont orientés perpendiculairement l'un à l'autre.

6. Microscope (50) selon la revendication 5, **caractérisé en ce que** l'unité de balayage comprend un miroir de balayage (20), dans lequel le miroir de balayage (20) est inclinable autour du deuxième axe (y) pour balayer l'échantillon (30) avec les faisceaux lumineux d'éclairage (52, 54, 56) le long du premier axe (x) et/ou le miroir de balayage (20) est inclinable autour du premier axe (x) pour balayer l'échantillon (30) avec les faisceaux lumineux d'éclairage (52, 54, 56) le long du deuxième axe (y).

7. Microscope (50) selon l'une quelconque des revendications précédentes, **caractérisé en ce que** l'unité de balayage (20) est en outre réalisée pour débalayer le faisceau lumineux de détection (58, 60, 62) focalisé sur le détecteur (71).

8. Microscope (50) selon l'une quelconque des revendications précédentes, **caractérisé en ce que** l'unité d'éclairage (12) et l'unité de balayage (20) interagissent
de sorte que les faisceaux lumineux d'éclairage (52, 54, 56) sont incidents dans une pupille d'entrée de l'objectif (28) de manière inclinée les uns par rapport aux autres autour du deuxième axe (y), afin de provoquer dans l'échantillon (30) le premier décalage parallèle le long du premier axe (x) et/ou l'unité d'éclairage (12) et l'unité de balayage (20) interagissent de sorte que les faisceaux lumineux d'éclairage (52, 54, 56) sont incidents dans la pupille d'entrée de l'objectif (28) de manière inclinée les uns par rapport aux autres autour du deuxième axe (x), afin de provoquer dans l'échantillon (30) le deuxième décalage parallèle le long du deuxième axe (y).

9. Microscope (50) selon l'une quelconque des revendications précédentes, **caractérisé en ce que** l'unité d'éclairage (12) et l'unité de balayage (20) interagissent de sorte que les faisceaux lumineux d'éclairage (52, 54, 56) n'éclairent respectivement qu'une zone partielle excentrée d'une pupille d'entrée de l'objectif (28).

10. Microscope (50) selon l'une quelconque des revendications précédentes, **caractérisé par** une optique de redressement (34) située en aval de l'unité de balayage (20) dans le sens de propagation de la lumière de détection avec une première optique partielle (36) pour générer une image intermédiaire et une deuxième optique partielle (38, 40) oblique par rapport à la première optique partielle pour la reproduction dans la bonne position de l'image intermédiaire sur le détecteur (71).

11. Microscope (50) selon l'une quelconque des revendications précédentes, **caractérisé par** au moins un élément (72, 74) situé en amont du détecteur (71) pour influencer la longueur de chemin optique qui compense le décalage des plans d'échantillon.

12. Microscope selon l'une quelconque des revendications précédentes, **caractérisé en ce que** le détecteur (71) est un détecteur de surface avec plusieurs sections de détecteur, lesquelles forment les détecteurs partiels.

13. Microscope (50) selon l'une quelconque des revendications précédentes, **caractérisé en ce que** le détecteur (71) comprend plusieurs détecteurs linéaires (66, 68, 70), lesquels forment les détecteurs partiels.

14. Microscope (50) selon la revendication 13, **caractérisé en ce que** les détecteurs linéaires (66, 68, 70) sont disposés le long de l'axe optique d'une optique de détection située en amont du détecteur avec un décalage les uns par rapport aux autres qui correspond au décalage des plans d'échantillon correspondants.

15. Microscope (50) selon l'une quelconque des revendications précédentes, **caractérisé en ce que** l'unité d'éclairage (12) présente une seule source lumineuse (14), laquelle émet les faisceaux lumineux d'éclairage (52, 54, 56) distincts.

16. Microscope (50) selon l'une quelconque des revendications précédentes, **caractérisé en ce que** l'unité d'éclairage (12) présente plusieurs sources lumineuses qui émettent chacune l'un des faisceaux lumineux d'éclairage (52, 54, 56).

17. Microscope (50) selon l'une quelconque des revendications précédentes, **caractérisé en ce que** l'unité d'éclairage (12) est réalisée pour émettre les faisceaux lumineux d'éclairage (52, 54, 56) avec différentes longueurs d'onde.

18. Microscope (50) selon l'une quelconque des revendications précédentes, **caractérisé en ce que** le détecteur comprend une caméra linéaire TDI.

19. Microscope (50) selon l'une quelconque des revendications précédentes, **caractérisé en ce que** l'unité de balayage (20) et l'optique (22) forment un système télécentrique.

20. Procédé pour l'imagerie microscopique d'un échantillon (30) selon lequel une lumière d'éclairage est émise sur l'échantillon (30) à l'aide d'une unité d'éclairage (12),
une lumière de détection qui provient de l'échantillon (30) est détectée à l'aide d'un détecteur (71),
la lumière d'éclairage émise par l'unité d'éclairage (12) est focalisée dans l'échantillon (30) à l'aide d'une optique (22) et la lumière de détection provenant de l'échantillon (30) est focalisée sur le détecteur (71),
dans lequel, à l'aide d'une unité de balayage (20), l'échantillon (30) est balayé avec la lumière d'éclairage et la lumière de détection focalisée sur le détecteur (71) est débalayée,
la lumière d'éclairage sous forme de faisceaux lumineux d'éclairage distincts est émise sur l'unité de balayage (20) de sorte que les faisceaux lumineux d'éclairage (52, 54, 56) soient focalisés simultanément sur des zones (A, B, C) d'échantillon en forme de bandes, séparées les unes des autres dans l'espace lors du balayage de l'échantillon (30),
la lumière de détection est détectée à l'aide du détecteur (71) sous forme de faisceaux lumineux de détection (58, 60, 62) distincts, provenant des zones (A, B, C) d'échantillon en forme de bandes, séparées les unes des autres dans l'espace, simultanément et séparément dans l'espace,
les zones (A, B, C) d'échantillon éclairées par les faisceaux lumineux d'éclairage (52, 54, 56) se situent dans plusieurs plans d'échantillon,
le détecteur (71) comprend plusieurs détecteurs partiels (66, 68, 70) qui sont associés chacun à l'un des plans d'échantillon, dans lequel le détecteur partiel (66, 68, 70) respectif détecte le faisceau lumineux de détection (58, 60, 62) qui provient du plan d'échantillon associé à ce détecteur partiel (66, 68, 70), et que les détecteurs partiels sont disposés dans une plage de profondeur de champ d'une optique de détection située en amont du détecteur,
**caractérisé en ce que** l'optique (22) contient un seul objectif qui forme un objectif d'éclairage pour focaliser les faisceaux lumineux d'éclairage (52, 54, 56) émis par l'unité d'éclairage (12) dans l'échantillon (30) et en même temps un objectif de détection pour focaliser le faisceau lumineux de détection (58, 60, 62) provenant de l'échantillon (30) sur le détecteur (71).
